# EUROPEAN PATENT APPLICATION

(11) **EP 4 089 127 A1**
(43) Date of publication of application: **16.11.2022**
(21) Application number: 21173446.2
(22) Date of filing: 12.05.2021
(51) Int. Cl.: C08G 18/10, C08G 18/32, C08G 18/44, C08G 18/48, C08G 18/66, C08G 18/75, C08G 18/76, C08G 18/79

(54) **CAST POLYURETHANE ELASTOMERS AND PRODUCTION THEREOF**

(71) Applicant: Covestro Deutschland AG, 51373 Leverkusen (DE)
(72) Inventor: The designation of the inventor has not yet been filed
(74) Representative: Levpat

(57) **Abstract**

The present invention relates to polyurethane cast elastomers, obtainable from the reaction of at least one NCO-terminated prepolymer (A) obtainable from the reaction of (A1) at least one polyisocyanate comprising at least two isocyanate groups, and (A2) optionally at least one polyol having a number average molecular weight of 100 to 5000 g/mol and a functionality of 2 to 4, in the presence of (A3) optionally at least one catalyst and/or (A4) optionally at least one additive, with a mixture comprising at least one polyether carbonate polyol (B) obtainable from the reaction of (B1) carbon dioxide, (B2) at least one alkylene oxide and (B3) at least one H-functional starter compound and optionally other polyether, polyester polyols, optionally at least one chain extender as component (C), and optionally at least one additive and/or catalyst as component (D), to a process for the preparation of this polyurethane cast elastomer, and to the use of this polyurethane cast elastomer.

## Description

The present invention relates to polyurethane cast elastomers, obtainable from the reaction of at least one NCO-terminated prepolymer (A) obtainable from the reaction of (A1) at least one polyisocyanate comprising at least two isocyanate groups, and (A2) optionally at least one polyol having a number average molecular weight of 100 to 5000 g/mol and a functionality of 2 to 4, in the presence of (A3) optionally at least one catalyst and/or (A4) optionally at least one additive, with a mixture comprising at least one polyether carbonate polyol (B) obtainable from the reaction of (B1) carbon dioxide, (B2) at least one alkylene oxide and (B3) at least one H-functional starter compound and optionally other polyether, polyester polyols, optionally at least one chain extender as component (C), and optionally at least one additive and/or catalyst as component (D), to a process for the preparation of this polyurethane cast elastomer, and to the use of this polyurethane cast elastomer.

Polyurethane cast elastomers comprising carbon dioxide based polycarbonate polyols are in general already known to the skilled artisan.

For example, EP 3 553 133 A1 discloses elastomeric polyurethanes comprising aliphatic polycarbonate chains. In general, the document discloses AB-side mixtures, wherein the B-side comprises an aliphatic polycarbonate polyol being derived from the copolymerization of carbon dioxide and one or more epoxides. In particular, a method for the preparation of an elastomer is taught being obtained from diphenylmethane-2,4'-diisocyanate prepolymer being based on a polyester polyol and having a functionality of 2, a poly(ethylene carbonate) polyol initiated with a polyether polyol, butanediol, dibutyl tin dilaurate as gelling catalyst and blowing catalyst.

WO 2015/026613 A1 teaches a polyurethane elastomeric seal for hydraulic pumps, wherein a reaction mixture including a prepolymer component, a polyol additive, a diol component and a curative component forms a sealing element with the reaction mixture and a mold. The prepolymer component includes a polycarbonate-isocyanate prepolymer that is the reaction product of at least on isocyanate component and a polycarbonate polyol component. In addition, the polycarbonate polyol of the polyol additive may be the same as the polycarbonate polyol used to form the polycarbonate prepolymer, wherein the polycarbonate used to form the prepolymer is selected from a list comprising an ether-carbonate polyol.

US 2020/0165777 A1 discloses a press cover or jacket including a polymer layer being made of a polyurethane which is obtained from a prepolymer and a crosslinker. In addition, the document describes that the press cover may be manufactured from an elastomeric polyurethane which may be formulated as a cast elastomer. The crosslinker may include butane-1,4-diol or hydroquinone-1,4-bis(2-hydroxyethyl) ether, a curative or at least one aliphatic or aromatic diamine or alkanolamine, and the crosslinker might comprise a second component being a polyether carbonate polyol.

EP 1 219 655 A1 discloses a thermoplastic polyurethane being useful for elastomers, wherein the polyurethane contains a polyaddition product of a diisocyanate and a chain extender with a liquid polyether carbonate diol. This polyether carbonate diol is a reaction product of a carbonate compound with a polyether diol and the diisocyanate is preferably selected from the group consisting of 4,4'-diphenylmethane diisocyanate, 1,6-hexamethylene diisocyanate and isophorone diisocyanate.

The materials according to the prior art are at least partly improvable in respect of their physical properties, in particular mechanical properties, for example in respect of hardness, tensile strength, high resilience and high temperature resistance.

In addition, it has been challenging to manufacture polyurethane elastomers, in particular comprising a polyether carbonate polyol, with both standard process, i.e. open mold, long pot life, high hardness as well as a short demolding time, and high level of mechanical performance.

Objective of the present invention are therefore to provide a polyurethane cast elastomer having improved physical and mechanical properties, in particular in respect of hardness, tensile strength, and thermal resistance. In addition, it has been an objective to provide a process for manufacturing polyurethane cast elastomers, in particular comprising a polyether carbonate polyol, with both standard process, i.e. open mold, in particular with a long pot life and a short demolding time, and high level of mechanical performance.

The objectives are solved by the polyurethane cast elastomer according to the present invention, obtainable from the reaction of at least one NCO-terminated prepolymer (A) obtainable from the reaction of
(A1) at least one polyisocyanate comprising at least two isocyanate groups, and
(A2) optionally at least one polyol having a number average molecular weight of 100 to 5000 g/mol and a functionality of 2 to 4,
   in the presence of
(A3) optionally at least one catalyst and/or
(A4) optionally at least one additive,
with a mixture comprising at least one polyether carbonate polyol (B) obtainable from the reaction of
(B1) carbon dioxide,
(B2) at least one alkylene oxide and
(B3) at least one H-functional starter compound,
wherein the at least one polyether carbonate polyol comprises an average content of carbonate groups of less than 50% by weight.

component (B) optionally also includes polyols with number-average molar mass Mn of from 100 to 5000 g/mol, preferably from 100 to 4000 g/mol, and particularly preferably from 100 to 3000 g/mol, and a functionality of 2 to 4, preferably polyester diols, polyether diols and mixtures of these,
optionally at least one chain extender as component (C), and
optionally at least one additive and/or catalyst as component (D).

The single components of the cast elastomer polyurethane according to the present invention will be described in detail in the following.

Component (A) of the polyurethane cast elastomer according to the present invention is at least one NCO-terminated prepolymer (A) obtainable from the reaction of
(A1) at least one polyisocyanate comprising at least two isocyanate groups, and
(A2) optionally at least one polyol having a number average molecular weight of 100 to 5000 g/mol and a functionality of 2 to 4,
   in the presence of
(A3) optionally at least one catalyst and/or
(A4) optionally at least one additive.

Component (A1), at least one polyisocyanate comprising at least two isocyanate groups, can preferably be selected from the group consisting of aromatic diisocyanates, for example toluene-2,4-diisocyanate (2,4-TDI), toluene-2,4-diisocyanate (2,4-TDI)/toluene-2,6-diisocyanate (2,6-TDI) mixtures, diphenylmethane-4,4'-diisocyanate (4,4'-MDI), diphenylmethane-2,4'-diisocyanate (2,4'-MDI), diphenylmethane-2,2'-diisocyanate (2,2'-MDI), diphenylmethane-2,4'-diisocyanate (2,4'-MDI)/diphenylmethane-4,4'-diisocyanate (4,4'-MDI) mixtures, urethane-modified liquid diphenylmethane-4,4'-diisocyanates and diphenylmethane-2,4'-diisocyanates, 4,4'-diisocyanato-1,2-diphenylethane, naphthylene-1,5-diisocyanate and mixtures thereof.

The diisocyanates mentioned can be used individually or in the form of mixtures with one another. They can also be used together with up to 15% by weight (based on the total quantity of diisocyanate) of a higher functional polyisocyanate, for example triphenylmethane-4,4',4"-triisocyanate or with polyphenyl polymethylene polyisocyanates.

Other polyisocyanates (A1) that can be used are aliphatic and cycloaliphatic diisocyanates. Mention may be made by way of example of hexamethylene diisocyanate (HDI), isophorone diisocyanate (IPDI), cyclohexane-1,4-diisocyanate, 1-methylcyclohexane-2,4-diisocyanate, and dicyclohexylmethane-4,4'-, -2,4'-, and -2,2'-diisocyanate, and also the corresponding isomer mixtures.

According to the present invention the wording "polyisocyanate" also means polyisocyanates having at least two isocyanate groups which have been modified, for example by 1-Methylphospholene-1-oxide (MPO), ethyl trifluoromethanesulphonate and/or carbodiimide. According to a preferred embodiment a carbodiimide modified polyisocyanate is used according to the present invention, in particular in combination with non-modified polyisocyanates.

In one preferred embodiment of the invention, the at least one polyisocyanate (A1) comprises at least one compound selected from the group consisting of isomers of dicyclohexylmethane-diisocyanate, in particular icyclohexylmethane-4,4'-, -2,4'-, and/or -2,2'-diisocyanate.

Component (A1) is in general used in an amount of 5 to 100% by weight, preferably 15 to 99% by weight, in each case based on the prepolymer.

Optional component (A2) of the elastomeric cast polyurethane according to the present invention is at least one polyol having a number average molecular weight of 100 to 5000 g/mol and a functionality of 2 to 4.

According to a preferred embodiment, component (A2) is present.

Preferred polyols which are used as component (A2) are polyols with a number-average molar mass Mn of from 100 to 5000 g/mol, preferably from 100 to 4000 g/mol, and particularly preferably from 100 to 3000 g/mol, and a functionality of 2 to 4. Preferred polyols are polyester diols, polyether diols and mixtures of these.

Suitable polyether diols can thus be produced by reacting one or more alkylene oxides having from 2 to 4 carbon atoms in the alkylene moiety with a starter molecule which comprises two active hydrogen atoms. Examples that may be mentioned of alkylene oxides are: ethylene oxide, 1,2-propylene oxide, epichlorohydrin, and 1,2-butylene oxide, and 2,3-butylene oxide. It is preferable to use ethylene oxide, propylene oxide, and mixtures of 1,2-propylene oxide and ethylene oxide. The alkylene oxides can be used individually, in alternating succession, or in the form of mixtures. Examples of starter molecules that can be used are: water, amino alcohols, for example N-alkyldiethanolamines, for example N-methyldiethanolamine, and diols, for example ethylene glycol, 1,3-propylene glycol, 1,4-butanediol, and 1,6-hexanediol. Mixtures of starter molecules can optionally also be used. Other suitable polyether diols are the tetrahydrofuran polymerization products containing hydroxyl groups. It is also possible to use proportions of from 0 to 30% by weight, based on the bifunctional polyethers, of trifunctional polyethers, the quantity of these being however at most that which produces a thermoplastically processible product. The average molar masses Mn of suitable polyether diols is from 100 to 5000 g/mol, preferably from 750 to 4000 g/mol, and very particularly preferably from 1000 to 3000 g/mol. They can be used either individually or else in the form of mixtures with one another.

Suitable polyester diols can by way of example be produced from dicarboxylic acids having from 2 to 12 carbon atoms, preferably having from 4 to 6 carbon atoms, and from polyhydric alcohols. Examples of dicarboxylic acids that can be used are: aliphatic dicarboxylic acids, for example succinic acid, maleic acid, glutaric acid, adipic acid, suberic acid, azelaic acid, and sebacic acid, and aromatic dicarboxylic acids, for example phthalic acid, isophthalic acid, and terephthalic acid. The dicarboxylic acids can be used individually or in the form of mixtures, e.g. in the form of a succinic, glutaric, and adipic acid mixture. For the production of the polyester diols it can optionally be advantageous to use, instead of the dicarboxylic acids, the corresponding dicarboxylic acid derivatives, for example carboxylic diesters having from 1 to 4 carbon atoms in the alcohol moiety, carboxylic anhydrides, or acyl chlorides. Examples of polyhydric alcohols are glycols having from 2 to 10, preferably from 2 to 6, carbon atoms, for example ethylene glycol, diethylene glycol, 1,4-butanediol, 1,5-pentanediol, 1,6-hexanediol, 1,10-decanediol, 1,12-dodecanediol, 2,2-dimethyl-1,3 propanediol, 1,3-propanediol, and dipropylene glycol. The polyhydric alcohols can be used alone or optionally in a mixture with one another, as required by the desired properties. Other suitable compounds are esters of carbonic acid with the diols mentioned, in particular those having from 4 to 6 carbon atoms, for example 1,4-butanediol or 1,6-hexanediol, condensates of hydroxycarboxylic acids, for example hydroxycaproic acid, and polymerization products of lactones, for example optionally substituted caprolactones. Preferred polyester diols used are ethanediol polyadipates, 1,4-butanediolpolyadipates, ethanediol-1,4-butanediol-polyadipates, 1,6-hexanediol neopentyl glycol polyadipates, 1,6-hexanediol-1,4-butanediol polyadipates, and polycaprolactones. The number-average molar mass Mn of the polyester diols is from 100 to 5000 g/mol, preferably from 100 to 4000 g/mol, and particularly preferably from 100 to 3000 g/mol, and they can be used individually or in the form of mixtures with one another.

Component (A2) which is used according to the present invention may also comprise one or more of the following high molecular weight polyols: a polyol which is based on grafted SAN polyether polyol, with a molecular weight around of 300 to 6000 g/mol, for example 5400 g/ mol; a polyol based on glycerol, ethylene oxide and propylene oxide with a molecular weight of 4000 to 5000 g/mol for example 4200 g/ mol, and a polyol with a shorter molecular weight of 300 to 500, for example 400 g/ mol, based on trimethylolpropane and propylene oxide. Those three polyols are combined with propanediol (called SUSTERRA^{®}, produced by Dupont Tate & Lyle BioProducts) as low molecular weight polyol.

Component (A2) is in general used in an amount of 0 to 95% by weight, preferably 0 to 85% by weight, in each case based on the prepolymer. According to a preferred embodiment, component (A2) is present.

The prepolymer (A) according to the present invention is obtainable in the presence of
(A3) optionally at least one catalyst and/or
(A4) optionally at least one additive.

Suitable catalysts can optionally be used in the process of the invention. The conventional tertiary amines known from the prior art, e.g. triethylamine, dimethylcyclohexylamine, N-methylmorpholine, N,N'-dimethylpiperazine, 2-(dimethylaminoethoxy)ethanol, diazabicyclo[2.2.2]octane (DABCO), diethylethanolamine, N-cocomorpholine, N,N-diethyl-3-diethylaminopropylamine dimethylbenzylamine, 1,8-Diazabicycloundec-7-ene (DBU),triazabicyclodecene (TBD) and N-methyltriazabyclodecene (MTBD). Organometallic compounds, for example titanium compounds, iron compounds, bismuth compounds, zinc compounds, or tin compounds, for example tin diacetate, tin dioctanoate, tin dilaurate, or the dialkyltin salts of aliphatic carboxylic acids, for example dibutyltin diacetate or dibutyltin dilaurate, are suitable catalysts for the production of PU elastomers. Preferred catalysts are amine compounds and/or organometallic compounds, in particular tin compounds.

Preferably, no catalyst (component (A3)) is used.

Suitable additives (component (A4)) which may be used according to the present invention are selected from the group consisting of lubricants, for example tatty acid esters, metal soaps of these, fatty acid amides, fatty acid ester amides, and silicone compounds, antiblocking agents, inhibitors, stabilizers with respect to hydrolysis, UV or other light, heat, and discoloration, flame retardants, dyes, pigments, inorganic and/or organic fillers, and reinforcing agents. Reinforcing agents are in particular fibrous reinforcing materials, e.g. inorganic fibers, where these are produced in accordance with the prior art and can also have been treated with a size. Information in greater detail concerning the auxiliaries and additional substances mentioned can be found in DE 29 01 774 A. Preferably, at least one additive (component (A4)) is used. Such an additive is in general used in an amount of 0.001 to 80% by weight.

Component (B) according to the present invention contains at least a polyether carbonate polyol which is obtainable by copolymerization of carbon dioxide and alkylene oxides in the presence of H-functional starter compounds or by addition of cyclic carbonate, preferably cyclic propylene carbonate and/or cyclic ethylene carbonate, to H-functional starter compounds, where the polyether carbonate polyol preferably has a CO₂ content of from 5 to 25% by weight. The polyether carbonate polyol preferably has a functionality of from 2 to 8, particularly preferably from 2 to 4, most preferably from 2 to 3. For the purposes of the invention, the expression "H-functional" refers to a starter compound which has H atoms which are active in respect of alkoxylation.

The copolymerization of carbon dioxide and one or more alkylene oxides is preferably effected in the presence of at least one DMC catalyst (double metal cyanide catalyst). Suitable catalysts for the addition of cyclic carbonate onto H-functional starter compounds are e.g. salts of alkali or alkaline-earth metals and organic compounds e.g. carbonate, acetate, or e.g. alkali hydroxides, like sodium hydroxide, or molybdates like Na₂MoO₄, wolframate, like Na₂WO₄, vanadates, like KVO₃ or K₃VO₄ and phosphates, like K₃PO₄. The catalyst is preferably selected from the group consisting of molybdates, wolframates, vanadates and phosphates, particularly preferably from the group consisting of tribasic alkali phosphates, alkali metal orthovanadates, alkali metal metavanadates, alkali metal wolframates und alkali metal molybdates.

The polyether carbonate polyols used in accordance with the invention preferably also have ether groups between the carbonate groups, shown schematically in formula (V). In the scheme according to formula (V), R is an organic radical such as alkyl, alkylaryl or aryl which can in each case also contain heteroatoms such as O, S, Si, etc.; e and f are each an integer. The polyether carbonate polyol shown in the scheme according to formula (V) should be considered to mean merely that blocks having the structure shown can in principle recur in the polyether carbonate polyol but the order, number and length of the blocks can vary and is not restricted to the polyether carbonate polyol shown in formula (V). In relation to formula (V), this means that the ratio of e/f is preferably from 2:1 to 1:20, particularly preferably from 1.5:1 to 1:10.

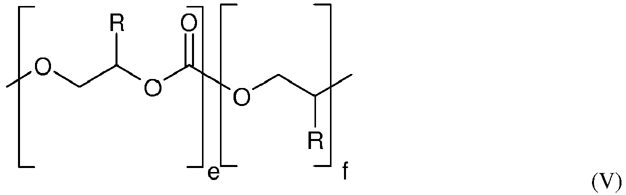

The proportion of incorporated CO2 ("units derived from carbon dioxide"; "CO2 content") in a polyether carbonate polyol can be determined from the evaluation of characteristic signals in the 1H NMR spectrum. The following example illustrates the determination of the proportion of units derived from carbon dioxide in a 1,8-octanediol-initiated CO2/propylene oxide polyether carbonate polyol.

The proportion of incorporated CO2 in a polyether carbonate polyol and the ratio of propylene carbonate to polyether carbonate polyol can be determined by means of ¹H NMR as outlined in the prior art.

For example, the production of polyether carbonate polyols according to B comprises by:
- (α): initially charging an H-functional starter compounds or a suspending agent without any H-functional groups and optionally removing water and/or other volatile compounds by means of elevated temperature and/or reduced pressure ("drying"), with the DMC catalyst being added to the H-functional starter compounds or suspending agent without any H-functional groups before or after drying,
- (β): adding a partial amount (based on the total amount of the amount of alkylene oxides used in the activation and copolymerization) of one or more alkylene oxides to the mixture resulting from step (α) to effect the activation, with this addition of a partial amount of alkylene oxide optionally being able to be carried out in the presence of CO2 and the hot spots occurring as a result of the subsequent exothermic chemical reaction and/or a pressure drop in the reactor then being awaited and the activation step (β) also being able to be carried out a number of times,
- (γ): adding alkylene oxides, carbon dioxide and optionally H-functional starter compounds to the mixture resulting from step (β), with the alkylene oxides used in step (β) being able to be identical to or different from the alkylene oxides used in step (γ).

In another embodiment the H-functional starter compounds, catalyst and cyclic carbonate are initially charged into a reactor and dried under inert gas (e.g. argon or nitrogen) at a temperature from 40 to 120 °C, preferably 40 to 100 °C, and a pressure of less than 500 mbar, preferably 5 mbar to 100 mbar. The mixture is afterwards heated to a temperature of 130 to 230 °C, preferably 140 to 200 °C, particularly 160 to 190 °C until the formation of gas is stopped. The reaction can be carried out under a pressure, preferably under a pressure of 50 mbar to 100 bar (absolute), particularly preferable of 200 mbar to 50 bar (absolute), more preferably of 500 mbar to 30 bar (absolute).

In general, alkylene oxides (epoxides) having 2 to 24 carbon atoms can be used for preparing the poly ether carbonate polyols A1. The alkylene oxides having from 2 to 24 carbon atoms are for example one or more compounds selected from the group consisting of ethylene oxide, propylene oxide, 1-butene oxide, 2,3-butene oxide, 2-methyl-1,2-propene oxide (isobutene oxide), 1-pentene oxide, 2,3-pentene oxide, 2-methyl-1,2-butene oxide, 3-methyl-1,2-butene oxide, 1-hexene oxide, 2,3-hexene oxide, 3,4-hexene oxide, 2-methyl-1,2-pentene oxide, 4-methyl-1,2-pentene oxide, 2-ethyl-1,2-butene oxide, 1-heptene oxide, 1-octene oxide, 1-nonene oxide, 1-decene oxide, 1-undecene oxide, 1-dodecene oxide, 4-methyl-1,2-pentene oxide, butadiene monoxide, isoprene monoxide, cyclopentene oxide, cyclohexene oxide, cycloheptene oxide, cyclooctene oxide, styrene oxide, methylstyrene oxide, pinene oxide, monoepoxidized or polyepoxidized fats as monoglycerides, diglycerides and triglycerides, epoxidized fatty acids, C1-C24 esters of epoxidized fatty acids, epichlorohydrin, glycidol, and derivatives of glycidol, for example methyl glycidyl ether, ethyl glycidyl ether, 2-ethylhexyl glycidyl ether, allyl glycidyl ether, glycidyl methacrylate and epoxy-functional alkoxysilanes, for example 3-glycidyloxypropyltrimethoxysilane, 3-glycidyloxypropyltriethoxysilane, 3-glycidyloxypropyltripropoxysilane, 3-glycidyloxypropylmethyldimethoxysilane, 3-glycidyloxypropylethyldiethoxysilane, 3-glycidyloxypropyltriisopropoxysilane. Preference is given to using ethylene oxide and/or propylene oxide and/or 1,2-butylene oxide, particularly preferably propylene oxide, as alkylene oxides.

In a preferred embodiment of the invention, the proportion of ethylene oxide in the total amount of propylene oxide and ethylene oxide used is from ≥ 0 to ≤ 90% by weight, preferably from ≥ 0 to ≤ 50% by weight, and is particularly preferably free of ethylene oxide.

As suitable H-functional starter compounds, it is possible to use compounds having H atoms which are active in respect of alkoxylation. Groups active in respect of the alkoxylation and having active hydrogen atoms are, for example, -OH, -NH2 (primary amines), -NH- (secondary amines), SH, and -CO2H, preferably -OH and -NH2, more preferably -OH. As H-functional starter compounds, use is made of, for example, one or more compounds selected from the group consisting of water, mono- or polyhydric alcohols, polyfunctional amines, polyhydric thiols, amino alcohols, thio alcohols, hydroxy esters, polyether polyols, polyester polyols, polyester ether polyols, polyether carbonate polyols, polycarbonate polyols, polycarbonates, polyethyleneimines, polyetheramines (e.g. Jeffamines^{®} from Huntsman, e.g. D-230, D-400, D 2000, T-403, T-3000, T-5000, or corresponding products from BASF, e.g. polyetheramine D230, D400, D200, T403, T5000), polytetrahydrofurans (e.g. PolyTHF^{®} from BASF, e.g. PolyTHF^{®} 250, 650S, 1000, 1000S, 1400, 1800, 2000), polytetrahydrofuranamines (BASF product polytetrahydrofuranamine 1700), polyether thiols, polyacrylate polyols, castor oil, the monoglyceride or diglyceride of ricinoleic acid, monoglycerides of fatty acids, chemically modified monoglycerides, diglycerides and/or triglycerides of fatty acids, and C1-C24-alkyl fatty acid esters containing an average of at least 2 OH groups per molecule. By way of example, the C1-C24-alkyl fatty acid esters containing an average of at least 2 OH groups per molecule are commercial products such as Lupranol Balance^{®} (from BASF AG), Merginol^{®} products (from Hobum Oleochemicals GmbH), Sovermol^{®} products (from Cognis Deutschland GmbH & Co. KG) and Soyol^{®}TM products (from USSC Co.).

Monofunctional starter compounds used may be alcohols, amines, thiols and carboxylic acids. Monofunctional alcohols used may be: methanol, ethanol, 1-propanol, 2-propanol, 1-butanol, 2-butanol, t-butanol, 3-buten-1-ol, 3-butyn-1-ol, 2-methyl-3-buten-2-ol, 2-methyl-3-butyn-2-ol, propargyl alcohol, 2-methyl-2-propanol, 1-t-butoxy-2-propanol, 1-pentanol, 2-pentanol, 3-pentanol, 1-hexanol, 2-hexanol, 3-hexanol, 1-heptanol, 2-heptanol, 3-heptanol, 1-octanol, 2-octanol, 3-octanol, 4-octanol, phenol, 2-hydroxybiphenyl, 3-hydroxybiphenyl, 4-hydroxybiphenyl, 2-hydroxypyridine, 3-hydroxypyridine, 4-hydroxypyridine. Useful monofunctional amines include: butylamine, t-butylamine, pentylamine, hexylamine, aniline, aziridine, pyrrolidine, piperidine, morpholine. Monofunctional thiols used may be: ethanethiol, 1-propanethiol, 2-propanethiol, 1-butanethiol, 3-methyl-1-butanethiol, 2-butene-1-thiol, thiophenol. Monofunctional carboxylic acids include: formic acid, acetic acid, propionic acid, butyric acid, fatty acids such as stearic acid, palmitic acid, oleic acid, linoleic acid, linolenic acid, benzoic acid, acrylic acid.

Polyhydric alcohols with suitability as H-functional starter compounds are, for example, dihydric alcohols (such as, for example, ethylene glycol, diethylene glycol, propylene glycol, dipropylene glycol, 1,3-propanediol, 1,4-butanediol, 1,4-butenediol, 1,4-butynediol, neopentyl glycol, 1,5-pentantanediol, methylpentanediols (such as, for example, 3-methyl-1,5-pentanediol), 1,6-hexanediol; 1,8-octanediol, 1,10-decanediol, 1,12-dodecanediol, bis(hydroxymethyl)cyclohexanes (such as, for example, 1,4-bis(hydroxymethyl)cyclohexane), triethylene glycol, tetraethylene glycol, polyethylene glycols, dipropylene glycol, tripropylene glycol, polypropylene glycols, dibutylene glycol, and polybutylene glycols); trihydric alcohols (such as, for example, trimethylolpropane, glycerol, trishydroxyethyl isocyanurate, castor oil); tetrahydric alcohols (such as, for example, pentaerythritol); polyalcohols (such as, for example, sorbitol, hexitol, sucrose, starch, starch hydrolyzates, cellulose, cellulose hydrolyzates, hydroxy-functionalized fats and oils, especially castor oil), and also all products of modification of these aforementioned alcohols with different amounts of α-caprolactone. In mixtures of H-functional starters, it is also possible to use trihydric alcohols, for example trimethylolpropane, glycerol, trishydroxyethyl isocyanurate and castor oil.

The H-functional starter compounds can also be selected from the class of polyether polyols, in particular those having a molecular weight Mn in the range from 100 to 4000 g/mol, preferably from 250 to 2000 g/mol. Preference is given to polyether polyols formed from repeat ethylene oxide and propylene oxide units, preferably having a proportion of propylene oxide units of 35% to 100%, particularly preferably having a proportion of propylene oxide units of 50% to 100%. These may be random copolymers, gradient copolymers, alternating copolymers or block copolymers of ethylene oxide and propylene oxide. Suitable polyether polyols made up of repeating propylene oxide and/or ethylene oxide units are for example, the Desmophen^{®}, Acclaim^{®}, Arcol^{®}, Baycoll^{®}, Bayfill^{®}, Bayflex^{®}, Baygal^{®}, PET^{®} and polyether polyols from Covestro Deutschland AG (for example Desmophen^{®} 3600Z, Desmophen^{®} 1900U, Acclaim^{®} Polyol 2200, Acclaim^{®} Polyol 40001, Arcol^{®} Polyol 1004, Arcol^{®} Polyol 1010, Arcol^{®} Polyol 1030, Arcol^{®} Polyol 1070, Baycoll^{®} BD 1110, Bayfill^{®} VPPU 0789, Baygal^{®} K55, PET^{®} 1004, Polyether^{®} S180). Further suitable homopolyethylene oxides are, for example, the Pluriol^{®} E products from BASF SE, suitable homopolypropylene oxides are, for example, the Pluriol^{®} P products from BASF SE; suitable mixed copolymers of ethylene oxide and propylene oxide are, for example, the Pluronic^{®} PE or Pluriol^{®} RPE products from BASF SE.

The H-functional starter compounds can also be selected from the class of polyester polyols, in particular those having a molecular weight Mn in the range from 200 to 4500 g/mol, preferably from 400 to 2500 g/mol. The polyester polyols used are at least difunctional polyesters. Polyester polyols preferably consist of alternating acid and alcohol units. Acid components used are, for example, succinic acid, maleic acid, maleic anhydride, adipic acid, phthalic anhydride, phthalic acid, isophthalic acid, terephthalic acid, tetrahydrophthalic acid, tetrahydrophthalic anhydride, hexahydrophthalic anhydride or mixtures of the acids and/or anhydrides mentioned. Alcohol components used are, for example, ethanediol, propane-1,2-diol, propane-1,3-diol, butane-1,4-diol, pentane-1,5-diol, neopentyl glycol, hexane-1,6-diol, 1,4-bis(hydroxymethyl)cyclohexane, diethylene glycol, dipropylene glycol, trimethylolpropane, glycerol, pentaerythritol or mixtures of the alcohols mentioned. Using dihydric or polyhydric polyether polyols as alcohol components gives polyester ether polyols which can likewise serve as starter compounds for preparing the polyether carbonate polyols. If polyether polyols are used to prepare the polyester ether polyols, preference is given to polyether polyols having a number-average molecular weight Mn of 150 to 2000 g/mol.

In addition, the H-functional starter compounds used may be polycarbonate polyols (for example polycarbonate diols), especially those having a molecular weight Mn in the range from 150 to 4500 g/mol, preferably 500 to 2500, which are prepared, for example, by reaction of phosgene, dimethyl carbonate, diethyl carbonate or diphenyl carbonate and di- and/or polyfunctional alcohols or polyester polyols or polyether polyols. Examples of polycarbonate polyols may be found in EP-A 1359177 for example. For example, the Desmophen^{®} C grades from Covestro Deutschland AG, e.g. Desmophen^{®} C 1100 or Desmophen^{®} C 2200, can be used as polycarbonate diols.

It is likewise possible to use polyether carbonate polyols as H-functional starter compounds. In particular, polyether carbonate polyols prepared by the above-described process are used. For this purpose, these polyether carbonate polyols used as H-functional starter compounds are prepared in a separate reaction step beforehand.

Preferred H-functional starter compounds are alcohols as mentioned above.

In a preferred embodiment of the invention, the polyether carbonate polyol B is obtainable by addition of carbon dioxide and alkylene oxides onto H-functional starter compounds using multimetal cyanide catalysts (DMC catalysts). The preparation of polyether carbonate polyols by addition of alkylene oxides and CO₂ onto H-functional starter compounds using DMC catalysts is known, for example, from EP-A 0222453, WO-A 2008/013731 and EP-A 2115032.

DMC catalysts are known in principle from the prior art for homopolymerization of epoxides (see, for example, US-A 3 404 109, US-A 3 829 505, US-A 3 941 849 and US-A 5 158 922). DMC catalysts which are described, for example, in US-A 5 470 813, EP-A 700 949, EP-A 743 093, EP-A 761 708, WO-A 97/40086, WO-A 98/16310 and WO-A 00/47649 have a very high activity in the homopolymerization of epoxides and make it possible to prepare polyether polyols and/or polyether carbonate polyols at very low catalyst concentrations (25 ppm or less). A typical example is the highly active DMC catalysts described in EP-A 700 949 which in addition to a double metal cyanide compound (e.g., zinc hexacyanocobaltate (III)) and an organic complexing ligand (e.g., t-butanol) contain a polyether having a number-average molecular weight Mn of greater than 500 g/mol.

The DMC catalyst is usually used in an amount of ≤ 1% by weight, preferably in an amount of ≤ 0.5% by weight, more preferably in an amount of ≤ 500 ppm and especially in an amount of ≤ 300 ppm, based in each case on the weight of the polyether carbonate polyol.

The at least one polyether carbonate polyol used as component (B) comprises an average content of carbonate groups of less than 50% by weight. According to a preferred embodiment of the invention, the content of carbonate groups, which is calculated as CO₂, in the polyether carbonate polyol is 3 to 35% by weight, preferably 5 to 30% by weight, particularly preferably 10 to 28% by weight. The determination method is for example NMR.

In another preferred embodiment of the invention, the number-average molar mass Mn of the polyether carbonate polyol is 500 to 10000 g/mol, preferably 500 to 7500 g/mol, particularly preferably 750 to 6000 g/mol and very particularly preferably 1000 to 5000 g/mol. The determination method is for example titration of the terminal OH groups.

It is preferred that the average OH functionality of the polyether carbonate polyol is 1.90 to 3.30.

According to a preferred embodiment of the present invention, the at least one alkylene oxide which is used to prepare component (B) does not contain any C-C-unsaturated double bonds.

Further preferred component (B) which is used according to the present invention does not contain any C-C-unsaturated double bonds.

The proportion of polyether carbonate polyols, based on the total mass of component (B), is preferably 5 to 100% by weight, particularly preferably 20 to 100% by weight, and very particularly preferably 40 and ≤ 100% by weight. It is also possible that various polyether carbonate polyols are present in component B).

According to the present invention, it is also possible and preferred to use beside polyether carbonate polyols as mentioned above, further hydroxy-terminated polyols with a number-average molar mass Mn of from 100 to 5000 g/mol, preferably from 100 to 4000 g/mol, and particularly preferably from 100 to 3000 g/mol. Preferred other polyols are polyester diols, polyether diols, polycarbonate diols, and mixtures of these.

Suitable polyether diols can thus be produced by reacting one or more alkylene oxides having from 2 to 4 carbon atoms in the alkylene moiety with a starter molecule which comprises two active hydrogen atoms. Examples that may be mentioned of alkylene oxides are: ethylene oxide, 1,2-propylene oxide, epichlorohydrin, and 1,2-butylene oxide, and 2,3-butylene oxide. It is preferable to use ethylene oxide, propylene oxide, and mixtures of 1,2-propylene oxide and ethylene oxide. The alkylene oxides can be used individually, in alternating succession, or in the form of mixtures. Examples of starter molecules that can be used are: water, amino alcohols, for example N-alkyldiethanolamines, for example N-methyldiethanolamine, and diols, for example ethylene glycol, 1,3-propylene glycol, 1,4-butanediol, and 1,6-hexanediol. Mixtures of starter molecules can optionally also be used. Other suitable polyether diols are the tetrahydrofuran polymerization products containing hydroxyl groups. It is also possible to use proportions of from 0 to 30% by weight, based on the bifunctional polyethers, of trifunctional polyethers, the quantity of these being however at most that which produces a thermoplastically processible product. The average molar masses Mn of suitable polyether diols is from 100 to 5000 g/mol, preferably from 750 to 4000 g/mol, and very particularly preferably from 1000 to 3000 g/mol. They can be used either individually or else in the form of mixtures with one another.

Suitable polyester diols can by way of example be produced from dicarboxylic acids having from 2 to 12 carbon atoms, preferably having from 4 to 6 carbon atoms, and from polyhydric alcohols. Examples of dicarboxylic acids that can be used are: aliphatic dicarboxylic acids, for example succinic acid, maleic acid, glutaric acid, adipic acid, suberic acid, azelaic acid, and sebacic acid, and aromatic dicarboxylic acids, for example phthalic acid, isophthalic acid, and terephthalic acid. The dicarboxylic acids can be used individually or in the form of mixtures, e.g. in the form of a succinic, glutaric, and adipic acid mixture. For the production of the polyester diols it can optionally be advantageous to use, instead of the dicarboxylic acids, the corresponding dicarboxylic acid derivatives, for example carboxylic diesters having from 1 to 4 carbon atoms in the alcohol moiety, carboxylic anhydrides, or acyl chlorides. Examples of polyhydric alcohols are glycols having from 2 to 10, preferably from 2 to 6, carbon atoms, for example ethylene glycol, diethylene glycol, 1,4-butanediol, 1,5-pentanediol, 1,6-hexanediol, 1,10-decanediol, 1,12-dodecanediol, 2,2-dimethyl-1,3 propanediol, 1,3-propanediol, and dipropylene glycol. The polyhydric alcohols can be used alone or optionally in a mixture with one another, as required by the desired properties. Other suitable compounds are esters of carbonic acid with the diols mentioned, in particular those having from 4 to 6 carbon atoms, for example 1,4-butanediol or 1,6-hexanediol, condensates of hydroxycarboxylic acids, for example hydroxycaproic acid, and polymerization products of lactones, for example optionally substituted caprolactones. Preferred polyester diols used are ethanediol polyadipates, 1,4-butanediolpolyadipates, ethanediol-1,4-butanediol-polyadipates, 1,6-hexanediol neopentyl glycol polyadipates, 1,6-hexanediol-1,4-butanediol polyadipates, and polycaprolactones. The number-average molar mass Mn of the polyester diols is from 100 to 5000 g/mol, preferably from 100 to 4000 g/mol, and particularly preferably from 100 to 3000 g/mol, and they can be used individually or in the form of mixtures with one another.
Component (B) which is used according to the present invention may also comprise one or more of the following high molecular weight polyols: a polyol which is based on grafted SAN polyether polyol, with a molecular weight around of 300 to 6000 g/mol, for example 5400 g/ mol; a polyol based on glycerol, ethylene oxide and propylene oxide with a molecular weight of 4000 to 5000 g/mol for example 4200 g/ mol, and a polyol with a shorter molecular weight of 300 to 500, for example 400 g/ mol, based on trimethylolpropale and propylene oxide. Those three polyols are combined with propanediol (called SUSTERRA^{®}, produced by Dupont Tate & Lyle BioProducts) as low molecular weight polyol.

According to a preferred embodiment of the present invention, component (B) is prepared in absence of at least one free radical initiator, for example at least one peroxide.

According to a further preferred embodiment of the present invention, the at least one polyurethane cast elastomer according to the present invention is prepared in absence of at least one free radical initiator, for example at least one peroxide.

The proportion of component (B) to the final elastomer, is preferably 2 to 99% by weight, particularly preferably 5 to 95% by weight, and very particularly preferably 10 and 95% by weight.

The polyurethane cast elastomer according to the present invention may optionally comprise at least one chain extender as component (C). According to the present invention possible chain extenders can comprise low-molecular-weight compounds with a molar mass of 60 to 490 g/mol, preferably 62 to 400 g/mol, and particularly preferably 62 to 300 g/mol, where these have at least two, in particular two, isocyanate-reactive groups.

In one preferred embodiment of the invention, the chain extenders (C) comprise, or consist of, diols, diamines, or diol/diamine mixtures, however preferably diols.

Suitable chain extenders are diols such as ethanediol, 1,2-ethanediol, 1,2-propanediol, 1,3-propanediol, 1,2-butanediol, 1,3-butanediol, 1,4-butanediol, 1,5-pentanediol, 2,2-dimethylpropane-1,3-diol, 2-butyl-2-ethyl propane-1,3-diol, 2-methyl-2,4-pentane diol, 2-ethyl-1,3-hexane diol, 2-methyl-1,3-propane diol, 1,5-hexanediol, 1,6-hexanediol, 1,8-octanediol, 1,10-decanediol, 1,12-dodecanediol, 2,2,4,4-tetramethylcyclobutane-1,3-diol, 1,3-cyclopentanediol, 1,2-cyclohexanediol, 1,3-cyclohexanediol, 1,4-cyclohexanediol, 1,2-cyclohexanedimethanol, 1,3-cyclohexanedimethanol, 1,4-cyclohexanedimethanol, 1,4-cyclohexanediethanol, isosorbide, glycerol monoesters, glycerol monoethers, trimethylolpropane monoesters, trimethylolpropane monoethers, pentaerythritol diesters, pentaerythritol diethers, and alkoxylated derivatives of any of these, diethylene glycol, triethylene glycol, tetraethylene glycol, higher poly(ethylene glycol), for example having number average molecular weights of from 220 to 2000 g/mol, dipropylene glycol, tripropylene glycol, and higher poly(propyleneglycols), alkoxylated derivative of a compound selected from the group consisting of a diacid, a diol, and a hydroxy acid, polymeric diol, preferably wherein the polymeric diol is selected from the group consisting of polyethers, polyesters, hydroxy-terminated polyolefins, polyether-copolyesters, polyether polycarbonates, polycarbonate-copolyesters, polyoxymethylene polymers, and alkoxylated analogs thereof, diesters of terephthalic acid with glycols having from 2 to 4 carbon atoms, for example bis(ethylene glycol)terephthlate or bis(1,4-butanediol)terephthlate, hydroxyalkylene ethers of hydroquinone, for example 1,4-di(hydroxyethyl)hydroquinone, and ethoxylated bisphenols, and also reaction products of these with ε caprolactone.

Other suitable chain extenders are (cyclo)aliphatic diamines, for example isophoronediamine, ethylenediamine, 1,2-propylenediamine, 1,3-propylenediamine, N-methylpropylene-1,3-diamine, N,N'-dimethylethylenediamine, and aromatic diamines, for example 2,4-toluenediamine and 2,6-toluenediamine, 6-methyl-2,4-bis(methylthio)phenylene-1,3-diamine and 2-methyl-4,6-bis(methylthio)phenylene-1,3-diamine, 3,5-diethyl-2,4-toluenediamine, and 3,5-diethyl-2,6-toluenediamine, and primary mono-, di-, tri-, or tetraalkyl-substituted 4,4'-diaminodiphenylmethanes.

Preferred chains extenders are aliphatic diols having from 2 to 14 carbon atoms, for example ethanediol, 1,3-propanediol, 1,4-butanediol, 1,5-pentanediol, 1,6-hexanediol, 1,8-octanediol, 1,10-decanediol, 1,12-dodecanediol, diethylene glycol, dipropylene glycol, neopentyl glycol and 1,4-di(hydroxyethyl)hydroquinone. Particular preference is given to the use of 1,3-propanediol, 1,4-butanediol, 1,6-hexanediol, and 6-methyl-2,4-bis(methylthio)phenylene-1,3-diamine and 2-methyl-4,6-bis(methylthio)phenylene-1,3-diamine, as chain extender.

Relatively small quantities of triols may also be added.

The proportion of component (C), based on the total mass of the polyurethane cast elastomer is preferably 0 to 30% by weight, particularly preferably 0 to 20% by weight. It is also possible that mixtures of chain extenders are used.

Preferably, the present invention relates to the polyurethane according to the present invention, wherein the at least chain extender (component C) is 1,4-butanediol.

The polyurethane cast elastomer according to the present invention comprises as an optional component at least one additive and/or catalyst as component (D).

Suitable catalysts can optionally be used in the process of the invention. The conventional tertiary amines known from the prior art, e.g. triethylamine, dimethylcyclohexylamine, N-methylmorpholine, N,N'-dimethylpiperazine, 2-(dimethylaminoethoxy)ethanol, diazabicyclo[2.2.2]octane (DABCO), diethylethanolamine, N-cocomorpholine, N,N-diethyl-3-diethylaminopropylamine dimethylbenzylamine, 1,8-Diazabicycloundec-7-ene (DBU),triazabicyclodecene (TBD) and N-methyltriazabyclodecene (MTBD). Organometallic compounds, for example titanium compounds, iron compounds, bismuth compounds, zinc compounds, or tin compounds, for example tin diacetate, tin dioctanoate, tin dilaurate, or the dialkyltin salts of aliphatic carboxylic acids, for example dibutyltin diacetate or dibutyltin dilaurate, are suitable catalysts for the production of PU elastomers. Preferred catalysts are amine compounds and/or organometallic compounds, in particular tin compounds.

The total quantity of catalysts based on the total mass of the polyurethane cast elastomer is generally about 0 to 5% by weight, preferably 0.0001 to 1% by weight, and particularly preferably 0.0002 to 0.5% by weight.

It is moreover also possible to add at least one additive, for example auxiliaries and/or additional substances, during the process of the invention. Mention may be made by way of example of lubricants, for example fatty acid esters, metal soaps of these, fatty acid amides, fatty acid ester amides, and silicone compounds, antiblocking agents, inhibitors, stabilizers with respect to hydrolysis, UV or other light, heat, and discoloration, flame retardants, dyes, pigments, inorganic and/or organic fillers, and reinforcing agents.

Reinforcing agents are in particular fibrous reinforcing materials, e.g. inorganic fibers, where these are produced in accordance with the prior art and can also have been treated with a size. Information in greater detail concerning the auxiliaries and additional substances mentioned can be found in the technical literature, for example in the monograph by J.H. Saunders and K.C. Frisch "High Polymers", volume XVI, Polyurethane, Parts 1 and 2, Verlag Interscience Publishers 1962 and 1964, and Taschenbuch für Kunststoff-Additive [Plastics additives handbook] by R. Gächter and H Müller (Hanser Verlag Munich 1990), or DE 29 01 774 A.

Other additives that can be incorporated into the polyurethane cast elastomers are thermoplastics, for example polycarbonates and acrylonitrile/butadiene/styrene terpolymers (ABS). It is also possible to use other elastomers, for example rubber, ethylene/vinyl acetate copolymers, styrene/butadiene copolymers, styrene/acrylonitrile copolymers, and also other polyurethane cast elastomers. Other compounds suitable for incorporation are commercially available plasticizers, for example phosphates, phthalates, adipates, sebacates, and alkylsulfonates.

Chain terminators that can be further used as additives are low-molecular-weight compounds having an isocyanate-reactive group, for example monoalcohols or monoamines. It is preferable to use at least one compound selected from the group of 1-octanol, stearyl alcohol, 1-butylamine, and stearylamine, and it is particularly preferable to use 1-octanol.

The polyurethane cast elastomer according to the present invention can be produced by reacting quantities of the structural components such that the molar ratio of the isocyanate groups from A) to the entirety of the groups in B), optionally C), and optionally D) reactive toward isocyanate is 0.8:1 to 1.2:1, preferably 0.92:1 to 1.15:1, and particularly preferably 0.94:1 to 1.10:1.

The Shore hardness of the polyurethane cast elastomer according to the present invention can be varied widely, for example from Shore A 5 to Shore D 90, for example via adjustment of the molar ratio of polyol B) to chain extender C), acquired according to ISO 48-4:2018.

The present invention further relates to the process for the preparation of the polyurethane cast elastomer according to the present invention at least comprising the steps of
(I) Provision of at least one NCO-terminated prepolymer (A),
(II) Provision of at least one polyether carbonate polyol (B),
(III) Optionally provision of at least one polyol which is different from the at least one polyether carbonate polyol (B) of step (II) and/or at least one chain extender (C) and
(IV) Reaction of the at least one NCO-terminated prepolymer (A), the at least one polyether carbonate polyol (B) and optionally the at least one polyol which is different from the at least one polyether carbonate polyol (B) of step (II) and/or at least one chain extender (C) or of the mixture obtained in step (IV) to obtain the polyurethane cast elastomer.

The single steps of the process according to the present invention will be described in detail in the following.

Step (I) of the process according to the present invention comprises the provision of at least one NCO-terminated prepolymer (A).

The NCO-terminated prepolymer (A) is obtained from the components as mentioned before. The preparation of a prepolymer is in general known to the skilled artisan in the art.

The provision of component (A) is in general done in a suitable reactor under suitable conditions known to the skilled artisan, for example under vacuum, and at a temperature of 70 to 100 °C. Preferably, no solvent is added.

According to a preferred embodiment of the present invention, step (II) of the process according to the present invention is conducted directly after step (I).

Step (II) of the process according to the present invention comprises the provision of at least one polyether carbonate polyol (B).

According to one embodiment of the present invention, step (II) comprises the provision of at least one polyether carbonate polyol (B). According to this embodiment, at least one polyol which is different from the at least one polyether carbonate polyol (B) of step (II) and/or at least one chain extender (C) is/are added in step (III) of the process according to the present invention.

According to a further embodiment of the present invention, step (II) comprises the provision of at least one polyether carbonate polyol (B) and of at least one polyol which is different from the at least one polyether carbonate polyol (B) of step (II) and/or at least one chain extender (C). According to this embodiment, no step (III) is conducted.

The at least one polyol which is different from the at least one polyether carbonate polyol (B) of step (II) are preferably hydroxy-terminated polyols with a number-average molar mass Mn of from 100 to 6000 g/mol, preferably from 100 to 5000 g/mol, and particularly preferably from 100 to 4000 g/mol, as mentioned above. In addition, polyols having a functionality of 3 or 4 can be added.

Step (II) of the process according to the present can in general be done according to any methods known to the skilled artisan. For example, component (B) and optionally further polyols and/or chain extenders are added to component (A) which is already present in a suitable reactor. It is also possible that component (B) and optionally further polyols and/or chain extenders are provided in a suitable reactor and component (A) is added thereto, this embodiment is preferred.

According to the present invention, the addition of hydroxy comprising compounds like components (B), (C) and/or at least one polyol which is different from the at least one polyether carbonate polyol (B) of step (II) and/or catalysts and/or additives can in general be done in any sequence and/or in any mixture. For example components, the at least one catalyst and/or additive can be added as single substance(s), as mixtures or as mixtures with one or more of components (B), (C) and/or at least one polyol which is different from the at least one polyether carbonate polyol (B) of step (II).

The provision, the measuring and the metering of the single components in steps (I), (II) and optional step (III) can be done by any method that is known to the skilled artisan, for example by hand, with the use of a balance, by syringes, pumps, automatic weighing in the reactor, low pressure dispensing machine etc.

Optional step (III) of the process according to the present invention comprises the provision of at least one polyol which is different from the at least one polyether carbonate polyol (B) of step (II) and/or at least one chain extender (C).

If step (III) is conducted, it is preferably done directly after step (II).

Optional step (III) of the process according to the present invention is done, if the at least one polyol which is different from the at least one polyether carbonate polyol (B) of step (II) and/or at least one chain extender (C) have not been added in step (B).

In the following preferred embodiments according to the present invention are disclosed.

According to a first preferred embodiment the process for the preparation of the polyurethane cast elastomer, in particular the steps of provision, are done by hand. According to a preferred embodiment thereof, the prepolymer (A) is provided in a suitable reactor, and then a mixture comprising all components which bear isocyanate-reactive groups, in particular the at least one polyether carbonate polyol (B) and optionally the at least one polyol which is different from the at least one polyether carbonate polyol (B) of step (II) and/or at least one chain extender (C), and optionally comprising the catalyst and/or additives, are added to the prepolymer (A). The mixture comprising all components which bear isocyanate-reactive groups, in particular the at least one polyether carbonate polyol (B) and optionally the at least one polyol which is different from the at least one polyether carbonate polyol (B) of step (II) and/or at least one chain extender (C), and optionally comprising the catalyst and/or additives, has been prepared before. According to this embodiment degassing is preferably done on the mixture.

According to a further preferred embodiment in which the reaction steps, in particular the steps of provision, are done by hand, a mixture comprising all components which bear isocyanate-reactive groups, in particular the at least one polyether carbonate polyol (B) and optionally the at least one polyol which is different from the at least one polyether carbonate polyol (B) of step (II) and/or at least one chain extender (C), and optionally comprising the catalyst and/or additives, is provided in a suitable reactor, for example by weighing them in one after the other. Prepolymer (A) is then added to this mixture. According to this embodiment degassing is preferably done on the mixture.

According to a second preferred embodiment the process for the preparation of the polyurethane cast elastomer, in particular the steps of provision, are done by machine, in particular by a low pressure dispensing machine. According to this embodiment all components of the reaction, in particular the prepolymer (A) and all components which bear isocyanate-reactive groups, in particular the at least one polyether carbonate polyol (B) and optionally the at least one polyol which is different from the at least one polyether carbonate polyol (B) of step (II) and/or at least one chain extender (C), and optionally comprising the catalyst and/or additives, are added to a suitable reaction at the same time and at the correct ratio and concentrations. This can preferably be done by pumps that meter the single components into the reactor, where the reaction takes place. The catalyst and/or additives may be premixed with one or more of the components, for example the components bearing isocyanate reactive groups. According to this embodiment degassing is preferably done on each component before they are metered into the reactor.

Step (IV) of the process according to the present invention comprises the reaction of the at least one NCO-terminated prepolymer (A), the at least one polyether carbonate polyol (B) and optionally the at least one polyol which is different from the at least one polyether carbonate polyol (B) of step (II) and/or at least one chain extender (C) to obtain the polyurethane cast elastomer.

After step (II) or optional step (III) of the process according to the present invention, all components (A), (B), optionally the at least one polyol which is different from the at least one polyether carbonate polyol (B) of step (II) and/or at least one chain extender (C) are present in a suitable reactor, preferably under an inert atmosphere.

Mixing is done for a time of for example 10 seconds to 3 minutes, preferably 30 to 90 seconds. In parallel to the mixing or after the mixing, the mixture is preferably degassed in a vacuum chamber, in particular according to methods known to the skilled artisan, until the mixture is bubble free, for example for 10 seconds to 2 minutes. Next, the mixture is preferably poured into an open or closed mold, preferably at a temperature of 20 to 120 °C, and then cured for 0.1 to 48 hours, preferably at a temperature of 20 to 120 °C. The mold as such is also known to the skilled artisan. The mold may have any form, according to a preferred embodiment of the present invention, the mold is in the form of an offshore bend restrictor.

After that, preferably the part made of the polyurethane cast elastomer is then demolded after a certain demolding time, for example 1 minutes to 2 hours, preferably 1 minute to one hour.

Optionally, a so-called maturation step can then be conducted to complete curing and reticulation. This is for example done by setting the cast polyurethane elastomer for 2 to 14 days at a temperature of 10 to 40 °C at 30 to 70% air humidity.

The elastomeric polyurethane according to the present invention shows physical properties which are at least comparable to the physical properties of products being present on the market.

All features and preferred embodiments that have been mentioned in respect of the polyurethane cast elastomer according to the present invention above also apply to the process according to the present invention.

The present invention therefore preferably relates to the process according to the present invention, wherein after step (II) or (III) and before step (IV) the at least one NCO-terminated prepolymer (A), the at least one polyether carbonate polyol (B) and optionally the at least one polyol which is different from the at least one polyether carbonate polyol (B) of step (II) and/or at least one chain extender (C) are mixed.

After that, the part which has been prepared from the polyurethane cast elastomer, is preferably ready to be used.

The polyurethane cast elastomers according to the present invention are very advantageous in respect of their physical properties, in particular mechanical properties, for example in respect of a high hardness of at least 82 shores D, a tensile strength of at least 70 MPa, a high temperature resistance and a high resilience.

The hardness of the polyurethane cast elastomer according to the present invention is therefore preferably 0 shores A to 100 shores D, preferably 5 shores A to 85 shores D, each acquired according to ISO 48 - 4:2018.

The tensile strength of the polyurethane cast elastomer according to the present invention is therefore preferably 50 to 80 MPa, preferably 60 to 75 MPa for a hardness above 80 shores D, each acquired according to DIN 53504 : 2017.

The high temperature resistance of the polyurethane cast elastomer according to the present invention is shown by measuring the hardness, acquired according to ISO 48-4:2018, at low and high temperatures, for examples -5 °C and 80 °C during 24h. The temperature resistance is therefore preferably shown by the hardness stability, characterized at -5 °C to not increase more than 5 shores and at 80 °C to not decrease more than 5 shores.

The rebound resilience of the polyurethane cast elastomer according to the present invention is therefore preferably 20 to 80%, in particular 30 to 70%, each acquired according to ASTM D7121 - 05(2018).

The polyurethane cast elastomers according to the present invention are very useful in challenging applications, in particular in offshore and marine applications, mine and quarries applications, pulp and paper applications, shoe soles, railway applications and wheels and rollers for handling.

The present invention therefore also relates to the use of the polyurethane cast elastomer according to the present invention in offshore and marine applications, mine and quarries applications, pulp and paper applications, shoe soles, railway applications and wheels and rollers for handling.

Preferred examples of offshore and marine applications are cable protection as bend restrictors and bend stiffeners, piggy back, clamps, fenders, cable ducting, buoyancy, J-tubes seals, leading edge protection, protective mats, dampening pads, dunnage, tensioner pads, rip grid floor, field joint, pigs.

Preferred examples of mine and quarries applications are mining screens, hydrocyclones, trommel, flotation cells, grinding mills and truck lining among other applications.

Preferred examples of railway applications are sealants and railway soles among other applications.

Preferred examples of pulp and paper applications are industrial tires and rolls, anvil cover, zero crush wheels.

The present invention also relates to shoe soles, wheels and rollers for handling, bend restrictors and bend stiffeners, piggy back clamps, boat fenders, cable ducting, buoyancy, J-tubes seals, leading edge protection, protective mats, dampening pads, mining screens, hydrocyclones and truck lining, sealants and railway soles industrial tires and rolls, comprising, preferably consisting of the polyurethane cast elastomer according to the present invention.

The present invention will be described in more detail by the following examples:

### Examples

The following materials are used:

| | **type** | **molecular weight (g/mol)** | **functionality** | **initiators** |
|---|---|---|---|---|
| DESMODUR B9M10 | carbodiimide modified MDI - PPG prepolymer | | | |
| DESMODUR B9M43 | carbodiimide modified MDI prepolymer | | | |
| BAYFIT 10SA98 | PPG polypropylene glycol | 110 | 3 | TMP (Trimethylolpropane) |
| 1,4-butanediol | alcohol chain extender | 90,0 | 2 | - |
| 3A ZEOLITA PASTA | humidity absorber | - | | - |
| SAG 47 | defoamer/additive for improving abrasion | - | | - |
| Cardyon LC06 | polycarbonate polyol CO₂ based | 2000,0 | 2 | - |
| MDI 1806 | Mixture of dicyclohexylmethane-4,4'- and -2,4'-diisocyanate (50% by weight each) | | 2 | - |
| POLYETHER L800 | PPG polypropylene glycol | 210 | 2 | PG (propylene glycol) |
| MDI CD-S | Carbodiimide- modified MDI: methylenediphenyl diisocyanate, oligomers | | | - |
| DESMOPHEN 10WF15 | PPG polypropylene glycol | 3200 | 3 | Glycerine |
| cardyon LC07 | polycarbonate polyol CO₂ based | 1000,0 | 2 | - |
| cardyon LC05 | polycarbonate polyol CO₂ based | 3000,0 | 3 | - |
| CATALYST | catalyst blend of 2,2'-[(dioctylstannylene)bis(thi o)]diacetate and diisooctyle mercaptoacetate isooctyle and Dioctyltin dithioglycolate | | | - |
| DESMODUR 0118 T | 4,4'-Methylene diphenyl diisocyanate : ≥ 99% / 2,4-Methylene diphenyl diisocyanate: ≤ 1% | | | |
| POLYOL T10 | PTMEG polyetherpolyol | 1000 | 2 | THF |

The single Prepolymers and Chain extenders and the corresponding elastomers A, B, C and D have been prepared according to the following:

### ELASTOMER A

### Preparation of the prepolymer A1

The components were first preheated to 50 °C. In a reactor heated to 80 °C under stirring and vacuum, 363 g of MDI 1806 were incorporated, then 561 g of MDI CD-S were added. 76 g of POLYETHER L800 were added, the mixture was homogenized during 1 hour and 30 minutes at 80 °C. The obtained material was then stored under nitrogen in a container and put aside.

### Preparation of the extender A2

The components were first preheated to 50 °C. In a reactor under stirring and vacuum, 198.8 g of BAYFIT 10SA98 were incorporated, then 56.7 g of BDO, then 723.7 g of Cardyon LC06 were added. 0.8 g of SAG 47E as well as 20 g of 3A ZEOLITA PASTA were added. The mixture was homogenized during 30 min at 50 °C. The obtained material was then stored in an airtight container and put aside.

### Preparation of the elastomer A

The prepolymer A1 and the extender A2 were stored at room temperature and preheating at 25°C is required for both components. In a cylindrical reactor, 105,84g of extender A2 were weighted and then 100g of prepolymer A1 were weighted on top. Then the mixture was stirred at 1000 rpm during 30 seconds and immediately degassed with a vacuum chamber until the mixture is bubble free. Then, the reacting mixture is poured in a mold stored at a temperature between 80 and 100 °C. After a waiting time of 40 minutes, the part can be demolded. Then, the part is post cured during 4 hours at 90 °C and the elastomer A was then obtained, with a hardness of 82 shores D.

### ELASTOMER B

### Preparation of the prepolymer B 1

The components were first preheated to 50 °C. In a reactor at 50 °C under stirring and vacuum, 99.6 g were incorporated, then 0.36 g of STABILIZER VMU 1076 was added. 0.005 g of ETHIL TRIFLAE and 0.0003 g of 1-Methylphospholene-1-oxide (MPO) were added. The mixture was homogenized during 30 min at 50 °C. The obtained material was then stored under nitrogen into a container and put aside.

### Preparation of the extender B2

The components were first preheated to 50 °C. In a reactor under stirring and vacuum, 610 g of DESMOPHEN 10WF15 were incorporated and 390 g of CARDYON LC07 were added. The mixture was homogenized during 30 min at 50 °C. The obtained material was then stored in an airtight container under nitrogen and put aside.

### Preparation of elastomer B

The prepolymer B1 and the extender B2 were stored at room temperature and preheating at 25°C is required for both components. In a cylindrical reactor, 90,09g of extender B2 was weighted and then 100g of prepolymer B1 was weighted on top. Then the mixture was stirred at 1000 rpm during 30 seconds and immediately degassed with a vacuum chamber until the mixture was bubble free. Then, the reacting mixture was poured in a mold stored at a temperature of 25°C. After a waiting time of 40 minutes, the part was demolded. Then, after 7 days at 25 °C, the elastomer B has its final properties, including a 15 shores A hardness.

### ELASTOMER C

### Preparation of the prepolymer C1

The components were first preheated to 50 to 60 °C. In a reactor at 80°C under stirring and vacuum, 516.2 g of DESMODUR 0118T were incorporated. Then 483.9 g of POLYOL T10 (TERATHANE 1000) were added. The mixture was homogenized during 2 h and 30 min at 80 °C. The obtained material was then stored under nitrogen into a container and put aside.

### Preparation of the extender C2

The components were first preheated to 50 °C. In a reactor under stirring and vacuum, 979.5 g of CARDYON LC05 were incorporated. Then, 1 g of SAG47E, 19.5 g of 3A ZEOLITA PASTA and 12.7 g of CATALYSE CATD0812-3 were added. The mixture was homogenized during 30 min at 50 °C. The obtained material was then stored in an airtight container under nitrogen and put aside.

### Preparation of elastomer C

The prepolymer C1 was preheated at 45°C. The extender C2 was preheated at 35°C. The chain extender butane diol BDO was preheated to 35 °C. In a cylindrical reactor, 6,7g of butanediol was weighted and then 160g of extender C2 was weighted on top. Then 100g of the prepolymer C1 was weighted above and the mixture was stirred at 1000 rpm during 30 seconds and immediately degassed with a vacuum chamber until the mixture is bubble free. Then, the reacting mixture is poured in a mold stored at a temperature of 80°C. After a waiting time of 30 minutes, the part was demolded. Then, the elastomer C is post cured during 16h at 80°C. In this case, the hardness obtained was 60 shores A.

### ELASTOMER D

### Preparation of prepolymer D1

The components were first preheated to 50 °C. In a reactor at 50 °C under stirring and vacuum, 99.6 g were incorporated, then 0.36 g of STABILIZER VMU 1076 was added. 0.005 g of ETHIL TRIFLAE and 0.0003 g of 1-Methylphospholene-1-oxide (MPO) were added. The mixture was homogenized during 30 min at 50 °C. The obtained material was then stored under nitrogen into a container and put aside.

### Preparation of extender D2

The components were first preheated to 50 °C. In a reactor under stirring and vacuum, 965.36 g of CARDYON LC05 were incorporated. Then, 0.97 g of SAG47E, 19.31 g of 3A ZEOLITA PASTA, 4.72 g of ETHACURE 100 and 9.65 g of CATALYSE CATD0812-3 were added. The mixture was homogenized during 30 min at 50 °C. The obtained material was then stored in an airtight container under nitrogen and put aside.

### Preparation of elastomer D

The prepolymer D1, the extender D2 and the chain extender butane diol BDO were preheated at 45°C. In a cylindrical reactor, 10,4g of butanediol was weighted and then 394g of extender Dd2 was weighted on top. Then 100g of the prepolymer D1 was weighted above and the mixture was stirred at 1000 rpm during 30 seconds and immediately degassed with a vacuum chamber until the mixture is bubble free. Then, the reacting mixture is poured in a mold stored at a temperature of 80°C. After a waiting time of 30 minutes, the part was demolded. Then, the elastomer C is post cured during 16h at 80°C. In this case, the hardness obtained was 55 shores A.

## Claims

1. Polyurethane cast elastomer, obtainable from the reaction of at least one NCO-terminated prepolymer (A) obtainable from the reaction of
(A1) at least one polyisocyanate comprising at least two isocyanate groups, and
(A2) optionally at least one polyol having a number average molecular weight of 100 to 5000 g/mol and a functionality of 2 to 4,
in the presence of
(A3) optionally at least one catalyst and/or
(A4) optionally at least one additive,
with a mixture comprising at least one polyether carbonate polyol (B) obtainable from the reaction of
(B1) carbon dioxide,
(B2) at least one alkylene oxide and
(B3) at least one H-functional starter compound,
wherein the at least one polyether carbonate polyol comprises an average of carbonate linkages of less than 50% by weight,
component (B) optionally also includes polyols with number-average molar mass Mn of from 100 to 5000 g/mol, preferably from 100 to 4000 g/mol, and particularly preferably from 100 to 3000 g/mol, and a functionality of 2 to 4, preferably polyester diols, polyether diols and mixtures of these.
optionally at least one chain extender as component (C), and
optionally at least one additive and/or catalyst as component (D).

2. Polyurethane cast elastomer according to claim 1, wherein the at least one polyisocyanate is selected from the group consisting of aromatic diisocyanates, for example toluene-2,4-diisocyanate (2,4-TDI), toluene-2,4-diisocyanate (2,4-TDI)/toluene-2,6-diisocyanate (2,6-TDI) mixtures, diphenylmethane-4,4'-diisocyanate (4,4'-MDI), diphenylmethane-2,4'-diisocyanate (2,4'-MDI), diphenylmethane-2,2'-diisocyanate (2,2'-MDI), diphenylmethane-2,4'-diisocyanate (2,4'-MDI)/diphenylmethane-4,4'-diisocyanate (4,4'-MDI) mixtures, urethane-modified liquid diphenylmethane-4,4'-diisocyanates and diphenylmethane-2,4'-diisocyanates, 4,4'-diisocyanato-1,2-diphenylethane, naphthylene-1,5-diisocyanate and mixtures thereof.

3. Polyurethane cast elastomer according to claim 1 or 2, wherein the at least one polyether carbonate polyol used as component (B) comprises an average content of carbonate groups of 3 to 35% by weight, preferably 5 to 30% by weight, particularly preferably 10 to 28% by weight.

4. Polyurethane cast elastomer according to any of claims 1 to 3, wherein the at least one alkylene oxide (component B2) is ethylene oxide and/or propylene oxide, in particular propylene oxide.

5. Polyurethane cast elastomer according to any of claims 1 to 4, wherein the H-functional starter compound (component B3) are alcohols of the general formula (I),
HO-(CH₂)ₓ-OH (I),
where x is a number from 1 to 20, preferably an even number from 2 to 20.

6. Polyurethane cast elastomer according to any of claims 1 to 5, wherein the optionally at least one chain extender (component C) comprises diols, diamines, or diol/diamine mixtures.

7. Process for the preparation of the polyurethane cast elastomer according to any of claims 1 to 6, at least comprising the steps of
(I) Provision of at least one NCO-terminated prepolymer (A),
(II) Provision of at least one polyether carbonate polyol (B),
(III) Optionally provision of at least one polyol which is different from the at least one polyether carbonate polyol (B) of step (II) and optionally at least one chain extender (C) and
(IV) Reaction of the at least one NCO-terminated prepolymer (A), the at least one polyether carbonate polyol (B) and optionally the at least one polyol which is different from the at least one polyether carbonate polyol (B) of step (II) and/or optionally at least one chain extender (C) to obtain the polyurethane cast elastomer.

8. Process according to claim 7, wherein the molar ratio of the isocyanate groups from A) to the entirety of the groups in B), optionally C), and optionally D) reactive toward isocyanate is 0.8:1 to 1.2:1, preferably 0.92:1 to 1.15:1, and particularly preferably 0.94:1 to 1.10:1.

9. Process according to claim 7 or 8, wherein after step (II) or (III) and before step (IV) the at least one NCO-terminated prepolymer (A), the at least one polyether carbonate polyol (B) and optionally the at least one polyol which is different from the at least one polyether carbonate polyol (B) of step (II) and/or at least one chain extender (C) are mixed.

10. Process according to any of claims 7 to 9, wherein the provision, the measuring and the metering of the single components in steps (I), (II) and optional step (III) can be done by by hand, with the use of a balance, by syringes, pumps, automatic weighing in the reactor and/or low pressure dispensing machine.

11. Process according to claim 10, wherein the prepolymer (A) is provided in a suitable reactor, and then a mixture comprising all components which bear isocyanate-reactive groups, in particular the at least one polyether carbonate polyol (B) and optionally the at least one polyol which is different from the at least one polyether carbonate polyol (B) of step (II) and/or optionally at least one chain extender (C), and optionally comprising the catalyst and/or additives (D), are added to the prepolymer (A).

12. Process according to claim 10, wherein a mixture comprising all components which bear isocyanate-reactive groups, in particular the at least one polyether carbonate polyol (B) and optionally the at least one polyol which is different from the at least one polyether carbonate polyol (B) of step (II) and/or at least one chain extender (C), and optionally comprising the catalyst and/or additives, is provided in a suitable reactor, and the prepolymer (A) is then added to this mixture.

13. Process according to any of claims 7 to 9, wherein the steps of provision are done by machine, preferably all components of the reaction, in particular the prepolymer (A) and all components which bear isocyanate-reactive groups, in particular the at least one polyether carbonate polyol (B) and optionally the at least one polyol which is different from the at least one polyether carbonate polyol (B) of step (II) and/or at least one chain extender (C), and optionally comprising the catalyst and/or additives, are added to a suitable reaction at the same time and at the correct ratio and concentrations.

14. Use of the polyurethane cast elastomer according to any of claims 1 to 6 in offshore and marine applications, mine and quarries applications, pulp and paper applications, shoe soles, railway applications and wheels and rollers for handling.

15. Shoe soles, wheels and rollers for handling, bend restrictors and bend stiffeners, piggy back clamps, fenders, cable ducting, buoyancy, J-tubes seals, leading edge protection, protective mats, dampening pads, dunnage, tensioner pads, field joint, pigs, rip grids floor, mining screens, trommel, flotation cells, grinding mills, zero crush wheels, anvil cover, hydrocyclones and truck lining, sealants and railway soles, industrial tires and rolls, comprising, preferably consisting of the polyurethane cast elastomer according to any of claims 1 to 6.
